# EUROPEAN PATENT APPLICATION

(11) **EP 4 760 934 A1**
(43) Date of publication of application: **17.06.2026**
(21) Application number: 25861301.7
(22) Date of filing: 27.08.2025
(51) Int. Cl.: H01M 50/264, H01M 50/204

(54) **SECONDARY BATTERY MODULE**

(30) Priority: 29.08.2024 KR 20240116625
(71) Applicant: LG Energy Solution, Ltd., Seoul 07335 (KR)
(72) Inventor: PARK, Jae Sung, Daejeon 34122 (KR)
(74) Representative: Goddar, Heinz J.
(86) International application number: PCT/KR2025/013032
(87) International publication number: WO 2026/049488

(57) **Abstract**

The present disclosure relates to a secondary battery module including a secondary battery stack including a plurality of secondary batteries stacked on each other, each secondary battery having two longer side portions and two shorter side portions respectively connecting two ends of the longer side portions, the secondary battery module including a foam pad inserted between adjacent secondary batteries in the secondary battery stack, wherein the foam pad includes a body made of a material having flexibility and having an accommodation portion which is an enclosed internal space; and a working fluid injected into the accommodation portion, and wherein the accommodation portion is deformed by a pressure applied from the secondary battery and the working fluid flows in the accommodation portion.

## Description

### TECHNICAL FIELD

This application is based on and claims priority from Korean Patent Application No. 10-2024-0116625 filed on August 29, 2024 with the Korean Intellectual Property Office, the disclosure of which is incorporated herein in its entirety by reference.

The present disclosure relates to a secondary battery module, and more particularly, to a secondary battery module including a foam pad that is deformed to the shape of a swollen secondary battery included in a secondary battery stack to apply contact pressure evenly to a shorter side portion of the secondary battery when swelling occurs in the corresponding secondary battery.

### BACKGROUND ART

The demand for high-efficiency secondary batteries is rapidly increasing in the field of mobile devices and electric vehicles. Among secondary batteries, lithium secondary batteries that have high energy density, can maintain higher voltage and exhibit a low self-discharge rate are commercialized and used in a wide range of application, and research and development activities are conducted to improve performance.

Secondary batteries have a structure in which an electrode assembly and an electrolyte solution are housed in a case such as a can or a pouch.

Among secondary batteries, pouch-type secondary batteries have a structure in which an electrode assembly is mounted within a pouch. In this instance, the electrode assembly has a structure in which a positive electrode, a separator and a negative electrode are repeatedly stacked, and each positive electrode tab extending from each positive electrode is combined into one and joined to a positive electrode lead (an electrode lead having positive polarity), and each negative electrode tab extending from each negative electrode is combined into one and joined to a negative electrode lead (an electrode lead having negative polarity). In addition, the ends of the positive electrode lead and the negative electrode lead protrude from the pouch to establish electrical connection to an external device.

Meanwhile, for secondary batteries mounted on vehicles or Energy Storage Systems (ESSs) to increase the output and the amount of electrical energy the secondary batteries can store, a plurality of secondary batteries is connected to form a secondary battery module, and a plurality of secondary battery modules is connected to form a secondary battery pack. That is, the secondary battery pack including the plurality of secondary battery modules, each secondary battery module including the plurality of secondary batteries is installed in a vehicle or an ESS.

When the secondary battery module is manufactured using pouch-type secondary batteries, the secondary batteries are stacked such that flat surfaces contact each other to provide a secondary battery stack 10.

In addition, to absorb the expansion and contraction of the secondary batteries 1 and reduce heat generation in the secondary battery stack 10, a foam pad 2 is additionally provided between adjacent secondary batteries 1.

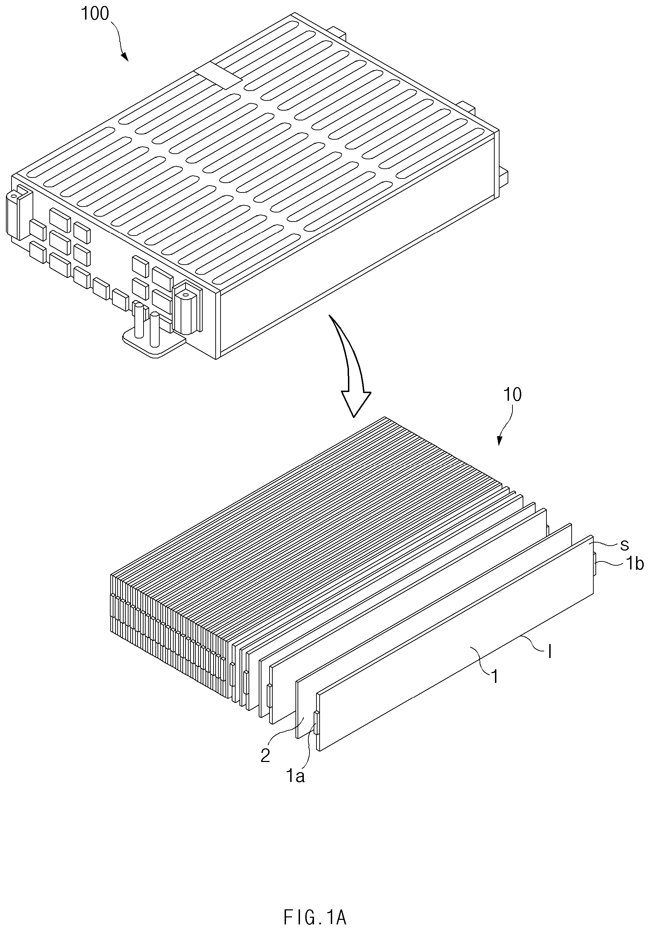

Referring to FIG. 1A showing the secondary battery module 100 and the secondary battery stack 10 including secondary batteries 1 and foam pads 2 stacked on each other in an exposed state by removing external frames from the secondary battery module 100, the secondary battery stack 10 is housed inside the frames that cover the outer surfaces to protect from external impacts, and each of positive electrode leads 1a and negative electrode leads 1b of the secondary batteries 1 is connected to a busbar mounted on a busbar assembly connected to the frames to establish electrical connection to an external device.

In this instance, the foam pad 2 is inserted between the secondary batteries 1 to absorb volume changes caused by the expansion and contraction of the secondary batteries 1.

That is, the secondary battery stack 10 experiences temperature changes, mechanical loads, shocks and vibrations depending on the environment in which it is mounted. The foam pad 2 is provided to protect the secondary batteries 1 from these external factors, and at least one secondary battery 1 is stacked between adjacent foam pads 2.

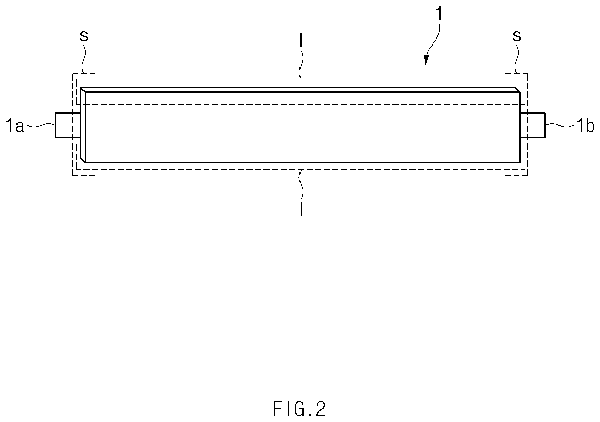

Additionally, the pouch-type secondary battery 1 is typically manufactured in a rectangular plate shape. That is, the secondary battery 1 has two longer side portions (1) and two shorter side portions (s) respectively connecting two ends of the longer side portions (1) (see FIG. 2), and the foam pad 2 has two longer side portions (1) and two shorter side portions (s) respectively connecting two ends of the longer side portions (1) to conform to the shape and size of the secondary battery.

Meanwhile, during repeated charging and discharging of the secondary battery 1, the electrolyte solution may evaporate, and as a result, gases may be produced within the pouch, causing swelling in the pouch.

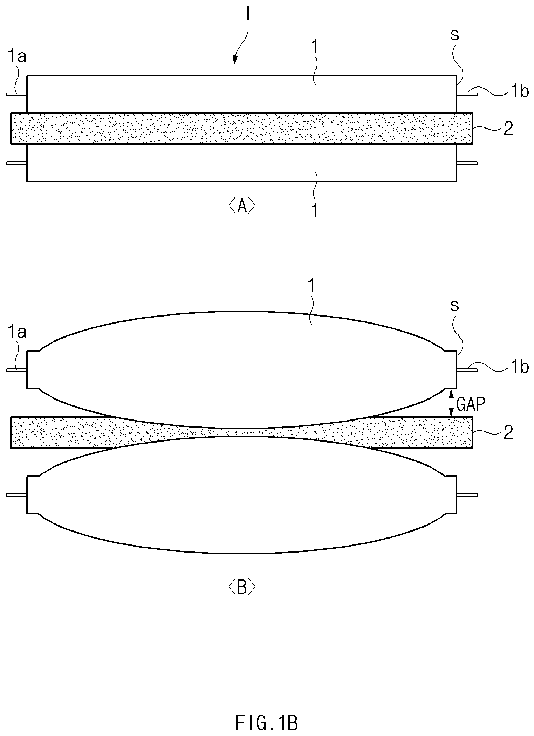

Referring to FIG. 1B showing the stacked foam pad before swelling <A> and after swelling <B>, the foam pad 2 applies contact pressure evenly to the entire secondary battery before swelling occurs in the secondary battery 1, but when swelling occurs in the secondary battery 1, especially in the central portion of the secondary battery 1, proper contact pressure is not applied to the shorter side portion (s) of the secondary battery 1.

The pressure difference may be one of the causes of lithium plating within the secondary battery. More specifically, when a pressure imbalance occurs due to lower contact pressure at the shorter side portion (s) of the secondary battery 1, a small amount of residual gases are trapped in the secondary battery 1 or pressure is not applied evenly to the secondary battery 1, making a difference in resistance within the electrode assembly, and the resistance difference causes lithium plating. That is, as the resistance difference is lower, the lithium plating likelihood is lower.

Therefore, to address this issue, in case where the thickness of the secondary battery 1 is uneven (due to swelling or other reasons), there is a need for a foam pad for providing sufficient contact pressure at the shorter side portion (s) where the electrode leads 1a, 1b protrude in order to solve the contact pressure imbalance.

### DISCLOSURE

### TECHNICAL PROBLEM

The present disclosure is directed to providing a secondary battery module including a foam pad for applying proper contact pressure to a shorter side portion of a secondary battery to reduce a pressure imbalance applied to the secondary battery when swelling occurs in the corresponding secondary battery.

### TECHNICAL SOLUTION

A secondary battery module provided by the present disclosure to achieve the above-described objective is a secondary battery module including a secondary battery stack including a plurality of secondary batteries stacked on each other, each secondary battery having two longer side portions and two shorter side portions respectively connecting two ends of the longer side portions, and includes a foam pad inserted between adjacent secondary batteries in the secondary battery stack, wherein the foam pad includes a body made of a material having flexibility and having an accommodation portion which is an enclosed internal space; and a working fluid injected into the accommodation portion, and wherein the accommodation portion is deformed by a pressure applied from the secondary battery and the working fluid flows in the accommodation portion. That is, when a part of the accommodation portion is deformed to reduce the space by the application of higher pressure, another part of the accommodation portion is deformed to increase the space, and the working fluid moves to the point (the deformed location to increase the space).

The working fluid is provided as any one selected from a liquid, a gas and a flowable semi-solid.

In this instance, the working fluid may include a mixture of two or more of the liquid, the gas and the flowable semi-solid.

The body is made from an insulating film having an electrical insulation property. More specifically, the body is made from the insulating film having a thickness in a range of 10 µm to 100 µm, and an electrically nonconductive property.

The body is in a shape having the two longer side portions and the two shorter side portions respectively connecting the two ends of the longer side portions. That is, the body may have a rectangular shape.

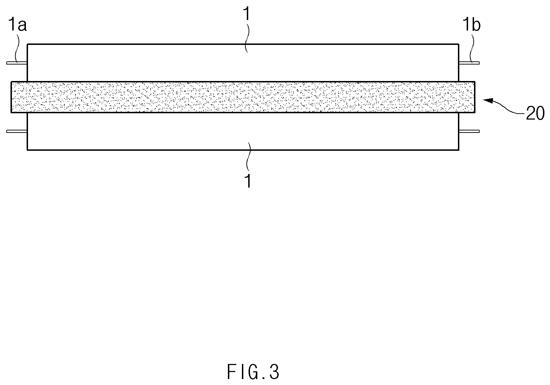

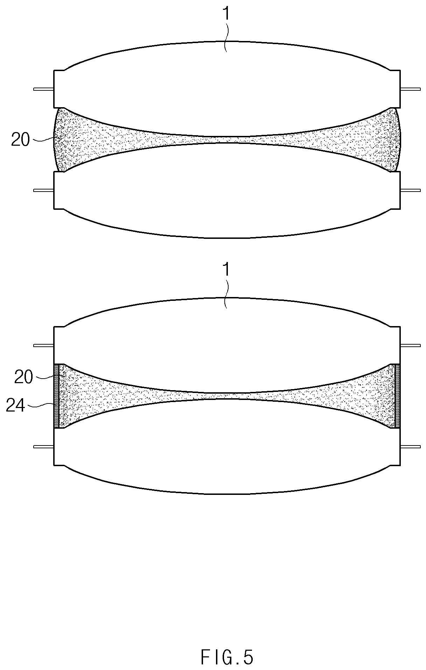

When swelling occurs in the adjacent secondary battery, the body having a smaller thickness at a central portion of the body along a length direction is deformed such that the thickness increases towards the end of the body. Here, the thickness refers to a stack direction in which the secondary battery and the foam pad are stacked, i.e., the top-bottom direction on the basis of FIGS. 3 and 5.

A reinforcement portion made of a material having higher rigidity than the material of the body is attached to an outer side of the shorter side portion.

Furthermore, the body of the foam pad provided by the present disclosure may be configured such that the amount of deformation decreases outwards from the central portion. That is, the body may be manufactured such that rigidity (or density) is lowest in the area including the central portion at the center between the two shorter side portions, and configured such that the amount of deformation decreases gradually or stepwise towards the two shorter side portions. That is, the rigidity as used herein may refer to the degree of resistance to deformation when an external force is applied, and high rigidity may represent a small amount of deformation, and low rigidity may represent a large amount of deformation.

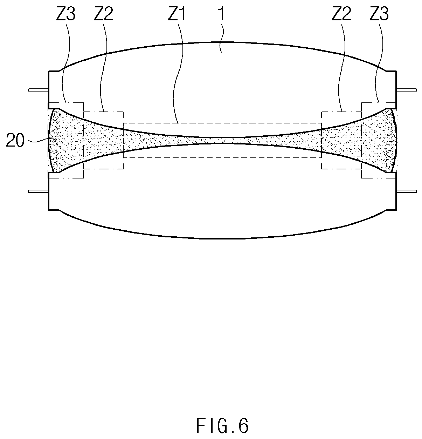

Referring to FIG. 6, the body includes a first region including a center between the two shorter side portions; a second region extending outward from the first region along the longer side portion; and a third region extending outward from the second region along the longer side portion and including the shorter side portion, and the body is manufactured with higher rigidity in the second region than the first region and higher rigidity in the third region than the second region.

That is, in the present disclosure, the body may include at least three regions (the first region, the second region, the third region) with different rigidity.

The foam pad may be only inserted into a pre-selected location between the adjacent secondary batteries in the secondary battery stack.

Alternatively, the foam pad may be inserted into every location between the adjacent secondary batteries in the secondary battery stack.

Furthermore, the present disclosure additionally provides a secondary battery pack including a plurality of secondary battery modules having the above-described technical features.

### ADVANTAGEOUS EFFECTS

In the secondary battery module of the present disclosure having the above-described technical features, as the body is deformed (by the flow of the working fluid injected into the accommodation portion) due to the pressure applied from the secondary battery, proper contact pressure may be applied to the shorter side portion of the secondary battery upon contact. That is, it may be possible to solve the pressure imbalance issue occurring in the existing foam pad structure.

As the reinforcement portion made of a material having higher rigidity than the material of the body is attached to the outside of the shorter side portion of the body, the foam pad of the present disclosure may prevent the body from protruding in an unnecessary direction or deforming into an unnecessary shape.

### BRIEF DESCRIPTION OF THE DRAWINGS

FIG. 1A is a diagram showing a secondary battery module and a secondary battery stack including secondary batteries and foam pads stacked on each other in an exposed state by removing external frames from the secondary battery module.
FIG. 1B is a diagram showing the stacked foam pad before swelling <A> and after swelling <B>.
FIG. 2 is a diagram showing a secondary battery included in a secondary battery module of the present disclosure.
FIG. 3 is a partial view of a secondary battery stack of the present disclosure, with a foam pad inserted between secondary batteries.
FIG. 4 is a partial projection view of the foam pad provided by the present disclosure.
FIG. 5 is a diagram showing the deformed foam pad in the absence (top) and presence (bottom) of a reinforcement portion when swelling occurs in a secondary battery.
FIG. 6 is a diagram showing three regions of different rigidity in the body of the foam pad.

### BEST MODE

Hereinafter, the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited to the disclosed embodiments.

To clearly describe the present disclosure, an irrelevant description is omitted, and the identical numerals are affixed to the identical or similar elements throughout the specification.

Additionally, it should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms properly for the best explanation.

The present disclosure relates to a secondary battery module including a foam pad for applying proper contact pressure (pressure applied to a contact surface) to a shorter side portion of a secondary battery when swelling occurs in the secondary battery, and an exemplary embodiment provided by the present disclosure will be described in more detail with reference to the accompanying drawings below.

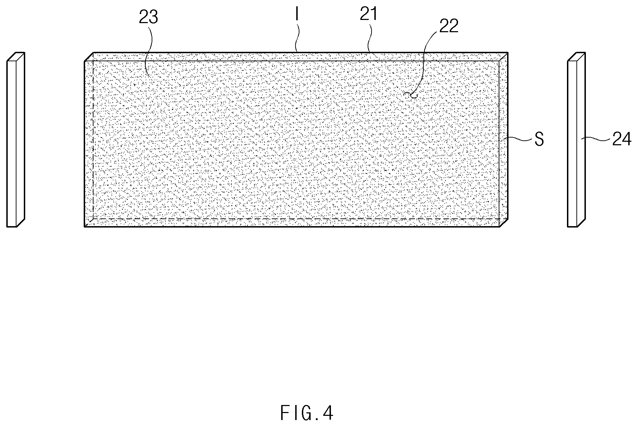

FIG. 2 is a diagram showing the secondary battery included in the secondary battery module of the present disclosure, and FIG. 3 is a partial view of a secondary battery stack of the present disclosure, with the foam pad inserted between secondary batteries. Additionally, FIG. 4 is a partial projection view of the foam pad provided by the present disclosure, and FIG. 5 is a diagram showing the deformed foam pad in the absence (top) and presence (bottom) of a reinforcement portion when swelling occurs in the secondary battery. For reference, FIG. 5 exaggeratedly depicts swelling in the secondary battery to clearly show the deformed foam pad of the present disclosure. Furthermore, FIG. 6 is a diagram showing three regions of different rigidity in the body of the foam pad.

The secondary battery module provided by the present disclosure includes a secondary battery stack 10 (see FIG. 1A) including secondary batteries 1 stacked such that flat surfaces contact each other, in the same way as the existing structure. In addition, the foam pad 20 is additionally provided between the adjacent secondary batteries 1 to absorb the expansion and contraction of the secondary batteries 1 and reduce heat generation in the secondary battery stack.

The secondary battery 1 provided by the present disclosure is a pouch-type secondary battery, and is manufactured in a rectangular plate shape as shown in FIG. 2. That is, the secondary battery 1 has two longer side portions (1) and two shorter side portions (s) respectively connecting two ends of the longer side portions (1) (see FIG. 2), and as shown in FIGS. 3 and 4, the foam pad 20 has two longer side portions (1) and two shorter side portions (s) respectively connecting two ends of the longer side portions (1) to conform to the shape and size of the secondary battery.

The foam pad 20 may have a length that is equal to or smaller than the secondary battery 1, but as shown in FIG. 3, preferably has a length that is larger than the secondary battery 1 (so that it protrudes from each of two ends of the secondary battery to a preset length). In the secondary battery stack 10, the foam pad 20 may be inserted between the adjacent secondary batteries 1, and at least one secondary battery may be positioned between adjacent foam pads.

Referring to FIG. 4, the foam pad 20 provided in an embodiment of the present disclosure includes a body 21 and a working fluid 23.

The body 21 may be made of a material having flexibility such as, for example, silicone, synthetic rubber, film or any other type of thin film material, and has an accommodation portion 22 which is an enclosed internal space.

The material of the body 21 is selected from electrically nonconductive materials. For example, the body provided in this embodiment is made from an insulating film having an electrical insulation property. More specifically, the body 21 is made from the insulating film having a thickness in a range of 10 µm to 100 µm. The body 21 is manufactured with the equal thickness over the entire area, but may be manufactured with different thicknesses at each location to reduce the extent to which the body 21 protrudes outwards (in the left-right direction on the basis of FIG. 5) when the working fluid 23 is present in a larger amount at the shorter side portion (s) (see the upper image in FIG. 5).

That is, the body 21 is an empty structure having an internal space with a size and shape enough to be inserted between the secondary batteries 1, and the space is defined as the accommodation portion 22 in the present disclosure.

Additionally, the working fluid 23 is injected into the accommodation portion 22. The working fluid 23 is provided as any one selected from a liquid, a gas and a flowable semi-solid. In this instance, the working fluid 23 may include a mixture of two or more of the liquid, the gas and the flowable semi-solid.

The working fluid 23 is preferably selected from incompressible fluids that have a property that volume hardly changes with pressure. That is, in the case of compressible fluids, when the middle portion of the body 21 is pressed, the body may be compressed but not expanded at the shorter side portion (s) (in the top-bottom direction on the basis of FIG. 5) as shown in the upper image of FIG. 5, and thus the working fluid 23 is not limited to a particular type but preferably is selected from incompressible fluids.

In the foam pad 20 as described above, the accommodation portion 22 is deformed by the pressure applied from the secondary battery 1 (pressure generated by the deformation of the secondary battery), and accordingly, the working fluid 23 flows in the accommodation portion 22. For example, as shown in FIG. 5, when pressure is applied to the middle portion of the body 21 due to swelling in the secondary battery 1, the central portion of the body 21 is deformed by the pressure, leading to a reduction in thickness, and accordingly, the working fluid 23 flows to the shorter side portion (s) located at two ends of the body 21. In addition, as illustrated, when the working fluid 23 is present in a larger amount at the shorter side portion (s) of the body 21, the body 21 is deformed and expanded in the top-bottom direction.

Accordingly, when swelling occurs in at least one of the adjacent secondary batteries 1, the body 21 may be deformed such that the thickness is smaller at the central portion along the length direction and increases towards the end of the body 21, so as to apply proper contact pressure to the shorter side portion (s) of the secondary battery 1.

Furthermore, the reinforcement portion 24 made of a material having higher rigidity than the material of the body 21 may be optionally attached to the outside of the shorter side portion (s) (of the body). That is, as shown in FIGS. 4 and 5, the reinforcement portion 24 is attached to the shorter side portion (s) of the body 21, and is deformed to prevent the body 21 from protruding in an unnecessary direction (left-right direction on the basis of FIG. 5) and help the body 21 to expand in a direction in which contact pressure acts on the secondary battery (top-bottom direction on the basis of FIG. 5). Accordingly, the reinforcement portion 24 is preferably manufactured such that it is least likely to bend and can stretch in the length direction (top-bottom direction on the basis of FIG. 5).

Additionally, the body 21 of the foam pad 20 provided by the present disclosure may be configured such that the amount of deformation decreases outwards from the central portion in order to support the shorter side portion (s) more efficiently.

That is, the body 21 may be manufactured such that rigidity (or density) is lowest in the area including the central portion at the center between the two shorter side portions (s), and configured such that the amount of deformation decreases gradually or stepwise towards the two shorter side portions (s). In addition, the rigidity as used herein may refer to the degree of resistance to deformation when an external force is applied, and high rigidity may represent a small amount of deformation, and low rigidity may represent a large amount of deformation.

Referring to FIG. 6, the body 21 includes a first region Z1 including the center between the two shorter side portions (s); a second region Z2 extending outward from the first region Z1 along the longer side portion (1); and a third region Z3 extending outward from the second region Z2 along the longer side portion (l) and including the shorter side portion (s), wherein the body 21 has higher rigidity in the second region Z2 than the first region Z1 and higher rigidity in the third region Z3 than the second region Z2.

That is, in the present disclosure, the body may include at least the first region Z1, the second region Z2 and the third region Z3 with different rigidity.

Furthermore, the body 21 having different rigidity in each of the plurality of regions may be manufactured through a known method that combines materials having different properties into a single product, such as, for example, multi-component molding.

Meanwhile, in the secondary battery stack 10, the foam pad 20 may be only inserted into a pre-selected location between the adjacent secondary batteries 1. Alternatively, in the secondary battery stack 10, the foam pad 20 may be inserted into every location between the adjacent secondary batteries.

Furthermore, the present disclosure additionally provides a secondary battery pack including a plurality of secondary battery modules having the above-described technical features.

In the secondary battery module of the present disclosure having the above-described technical features, as the body is deformed (by the flow of the working fluid injected into the accommodation portion) due to the pressure applied from the secondary battery, proper contact pressure may be applied to the shorter side portion of the secondary battery upon contact. That is, it may be possible to solve the pressure imbalance issue occurring in the existing foam pad structure.

As the reinforcement portion made of a material having higher rigidity than the material of the body is attached to the outside of the shorter side portion of the body, the foam pad of the present disclosure may prevent the body from protruding in an unnecessary direction or deforming into an unnecessary shape.

Although the present disclosure has been hereinabove described with regard to certain embodiments and drawings, the present disclosure is not limited thereto, and it is obvious to persons having ordinary skill in the technical field pertaining to the present disclosure to make a variety of changes and modifications within the scope of the technical aspects of the present disclosure and the appended claims and equivalents thereof.

### [List of Reference Numerals]

1: Secondary battery
10: Secondary battery stack
20: Foam pad
21: Body
22: Accommodation portion
23: Working fluid
24: Reinforcement portion

## Claims

1. A secondary battery module comprising a secondary battery stack including a plurality of secondary batteries stacked on each other, each secondary battery having two longer side portions and two shorter side portions respectively connecting two ends of the longer side portions,
the secondary battery module comprising a foam pad inserted between adjacent secondary batteries in the secondary battery stack,
wherein the foam pad includes:
a body made of a material having flexibility and having an accommodation portion which is an enclosed internal space; and a working fluid injected into the accommodation portion, and
wherein the accommodation portion is deformed by a pressure applied from the secondary battery and the working fluid flows in the accommodation portion.

2. The secondary battery module according to claim 1,
wherein the working fluid includes any one selected from a liquid, a gas and a flowable semi-solid.

3. The secondary battery module according to claim 2,
wherein the working fluid includes a mixture of two or more of the liquid, the gas and the flowable semi-solid.

4. The secondary battery module according to claim 1,
wherein the body is made from an insulating film having an electrical insulation property.

5. The secondary battery module according to claim 4,
wherein the body is made from the insulating film having a thickness in a range of 10 µm to 100 µm.

6. The secondary battery module according to claim 1,
wherein the body is in a shape having the two longer side portions and the two shorter side portions respectively connecting the two ends of the longer side portions.

7. The secondary battery module according to claim 6,
wherein when swelling occurs in the adjacent secondary battery, the body having a smaller thickness at a central portion of the body along a length direction is deformed such that the thickness increases towards the end of the body.

8. The secondary battery module according to claim 7,
wherein a reinforcement portion made of a material having higher rigidity than the material of the body is attached to an outer side of the shorter side portion.

9. The secondary battery module according to claim 7,
wherein the body includes:
a first region including a center between the two shorter side portions;
a second region extending outward from the first region along the longer side portion; and
a third region extending outward from the second region along the longer side portion and including the shorter side portion, and
wherein the body is manufactured with higher rigidity in the second region than the first region and higher rigidity in the third region than the second region.

10. The secondary battery module according to any one of claims 1 to 9,
wherein the foam pad is only inserted into a pre-selected location between the adjacent secondary batteries in the secondary battery stack.

11. The secondary battery module according to any one of claims 1 to 9,
wherein the foam pad is inserted into every location between the adjacent secondary batteries in the secondary battery stack.

12. A secondary battery pack comprising a plurality of secondary battery modules according to any one of claims 1 to 9.
